# EUROPÄISCHE PATENTSCHRIFT

(11) **EP 2 223 818 B1**
(45) Veröffentlichungstag und Bekanntmachung des Hinweises auf die Patenterteilung: **26.02.2014**
(21) Anmeldenummer: 09014824.8
(22) Anmeldetag: 30.11.2009
(51) Int. Cl.: B60J 10/00, B60J 10/04, B60J 10/08

(54) **Vorrichtung und Verfahren zum Befestigen eines gummielastischen Dichtprofils, sowie Befestigungselement zur Befestigung des Dichtprofils**
Device and method for mounting an elastic rubber seal profile and fastening element for fastening the seal profile
Dispositif et procédé de fixation d'un profil d'étanchéité en caoutchouc élastique, ainsi qu'élément de fixation destiné à la fixation du profil d'étanchéité

(30) Priorität: 27.02.2009 DE 102009010668
(43) Veröffentlichungstag der Anmeldung: 01.09.2010
(73) Patentinhaber: Volkswagen Aktiengesellschaft, 38440 Wolfsburg (DE)
(72) Erfinder: Hoffmann, Uwe, 38165 Flechtorf (DE); Sauß, Christian, 38553 Wasbüttel (DE); Dinh, Van Khoa, 38448 Wolfsburg (DE); Schmidt, Daniela, 38547 Calberlah (DE)

(56) Entgegenhaltungen:
- EP-A1- 2 168 800
- EP-A2- 1 619 060
- JP-A- 2007 062 532
- US-A- 6 012 760
- US-A1- 2004 177 562

## Beschreibung

Die vorliegende Erfindung betrifft eine Vorrichtung zum Befestigen eines gummielastischen Dichtprofiles, das auf Randflansche insbesondere eines umlaufenden Fensterrahmens einer Türe von Kraftfahrzeugen aufgesteckt ist, gemäß dem Oberbegriff des Patentanspruches 1.

Eine Vorrichtung mit einem auf Randflansche eines Fensterrahmens einer Türe von Kraftfahrzeugen aufgesteckten und geklebten Dicht- und Fensterführungsprofiles beschreibt z.B. die DE 199 12 176 A1. Kritisch ist dabei der Festsitz des Dichtprofiles im Eckbereich zwischen einem horizontal und einem vertikal verlaufenden Abschnitt des Fensterrahmens. Es hat sich gezeigt, dass im Fahrzeugbetrieb insbesondere beim Ein- und Aussteigen von Personen diese sich häufig an diesem Eckbereich abstützen und diesen dementsprechend stark belasten.

Aufgabe der Erfindung ist es, eine Vorrichtung zum Befestigen des Dichtprofiles im Eckbereich zu schaffen, die fertigungstechnisch günstig und montageeinfach einen zuverlässigen Festsitz des Dichtprofiles auch im kritischen Eckbereich sicherstellen.

Aus der US 6 012 760 A ist eine gattungsgemäße Vorrichtung zum Befestigen eines gummielastischen Dichtprofiles bekannt, das auf einem umlaufenden Fensterrahmen einer Kraftfahrzeugtür aufgesteckt und/oder aufgeklebt ist. Das Dichtprofil ist zumindest in einem Eckbereich durch ein von außen einsteckbares Befestigungselement am Fensterrahmen gesichert.

Diese Aufgabe wird erfindungsgemäß mit den Merkmalen des Patentanspruches 1 gelöst. Vorteilhafte und besonders zweckmäßige Weiterbildungen der Erfindung sind in den abhängigen Ansprüchen angeführt.

Erfindungsgemäß wird vorgeschlagen, dass das Dichtprofil zumindest in einem Eckbereich durch ein von außen einsteckbares Befestigungselement bzw. einen Clip formschlüssig mit dem Fensterrahmen verbunden ist. Dies stellt eine besonders montagegünstige Lösung dar, die zwischen dem Fensterrahmen und dem Dichtungsprofil eine zuverlässige, formschlüssige Verbindung durch einfaches Einstecken des Clips von außen herstellt.

Erfindungsgemäß ist das Dichtprofil in zumindest dem einen Eckbereich mit einem verrundeten, im Querschnitt gesehen materialverstärkten Formeckteil ausgeführt, durch das hindurch der Clip mit dem Fensterrahmen verbunden ist. Insbesondere kann dabei das Eckteil einstückig mit dem gesamten Dichtprofil hergestellt sein.

In baulich besonders günstiger Weise umfasst das Eckteil des Dichtprofiles mit zwei Schenkelleisten einen verrundeten Randflansch des Fensterrahmens, wobei der stiftförmige Clip durch korrespondierende, in einer Flucht liegende Ausnehmungen in den Schenkelleisten und im Randflansch des Fensterrahmens eingeschoben ist.

Des Weiteren kann der stiftförmige Clip im Wesentlichen in einer Winkelhalbierenden schräg zwischen einem horizontal und einem vertikal verlaufenden Abschnitt des Dichtprofiles eingesteckt sein, also unmittelbar im Zentrum des Eckbereiches mit günstiger Krafteinleitung in den Fensterrahmen positioniert sein.

In weiterer, vorteilhafter Ausgestaltung der Erfindung kann der Fensterrahmen durch ein Innenblech und ein Außenblech mit miteinander verschweißten Randflanschen in einem geschlossenen Hohlprofil ausgeführt sein, wobei das Dichtprofil mit entsprechenden, etwa U-förmig ausgeführten Halteleisten die Randflansche umfasst, und wobei ferner das Außenblech im Eckbereich derart ausgeklinkt ist, dass die materialverstärkte eine Schenkelleiste des Dichtprofiles über den Randflansch des Innenbleches und durch die Ausklinkung des Außenbleches hindurch aufschiebbar und mittels des Clips mit dem Innenblech verbunden ist. Neben dem zuverlässigen Festsitz des Dichtprofiles wird dadurch auch eine zuverlässig wirksame Abdichtung gegen eindringende Feuchtigkeit, etc. im Eckbereich erzielt.

Wenn an die äußeren, den Fensterrahmen umfangsseitig begrenzenden Halteleisten des Dichtprofiles eine Dichtlippe und eine äußere Abdecklippe angeformt sind, kann zur Vereinfachung der Montage des Clips die innere Dichtlippe im Eckbereich durch die äußere, materialverstärkte Schenkelleiste unterbrochen sein, durch die hindurch dann der Clip unbehindert montierbar ist.

Der stiftförmige Clip kann fertigungstechnisch und funktionell günstig mit Widerhaken zu den Ausnehmungen in den Schenkelleisten und/oder dem Fensterrahmen bildenden Vorsprüngen versehen sein, um eine zuverlässige, dauerhafte Positionierung in den Ausnehmungen auch bei durch ein Ein- oder Aussteigen von Personen auftretenden Belastungen sicherzustellen.

Zur Erzielung einer schnellen und prozesssicheren Montage kann der stiftförmige Clip ferner einen achsparallelen Einlaufmontagekanal aufweisen, der mit einer Einschnürung in der Ausnehmung zumindest der inneren Schenkelleiste in Umfangsrichtung formschlüssig zusammenwirkt. Ferner kann der stiftförmige Clip zwischen dem Einlaufmontagekanal und den als Widerhaken wirkenden Vorsprüngen einen Dichtabschnitt aufweisen, der dichtend mit einer der Ausnehmungen der Schenkelleisten zusammenwirkt und einem Eindringen von Feuchtigkeit von außen über den Clip und die Ausnehmungen entgegenwirkt.

Zur Sicherstellung einer problemlosen Demontage kann der stiftförmige Clip zudem mit einem flachen Kopfteil ausgeführt sein, das zum einen die Einstecktiefe des Clips begrenzt und dessen Herausziehen mittels eines geeigneten Werkzeuges erleichtert.

Des Weiteren kann der stiftförmige Clip mit einer sicht- oder fühlbaren Markierung versehen sein, die sicherstellt, dass in einer Vormontagestellung der in die Ausnehmung der äußeren Schenkelleiste eingesteckte Clip (ggf. als Vormontageeinheit mit dem Dichtprofil) diese nicht nach innen überragt.

Schließlich kann der Clip im Querschnitt polygonförmig, insbesondere quadratisch, ausgeführt und zudem in kostengünstiger Weise einstückig als Kunststoff- Spritzteil hergestellt sein.

Ein Ausführungsbeispiel der Erfindung ist im Folgenden mit weiteren Einzelheiten näher erläutert. Die schematisch Zeichnung zeigt in:
- Fig. 1: eine Ansicht von außerhalb eines Kraftfahrzeuges auf den Eckbereich eines Fensterrahmens einer Kraftfahrzeugtüre mit einem aufgesteckten Dicht- und Fensterführungsprofil;
- Fig. 2: einen Schnitt gemäß Linie II - II der Fig. 1 durch den horizontal verlaufenden Abschnitt des Fensterrahmens mit Dichtprofil;
- Fig. 3: eine Ansicht X der Fig. 1 von schräg innen auf den Eckbereich des Fensterrahmens mit an das Dichtprofil angeformten Eckteil und einen eingesteckten Clip zur formschlüssigen Halterung des Eckteiles am Fensterrahmen;
- Fig. 4: einen Schnitt gemäß Linie IV - IV der Fig. 1 durch den Fensterrahmen und das Eckteil mit in Vormontagestellung eingesetztem Clip; und
- Fig. 5: den stiftförmigen Clip in raumbildlicher Einzeldarstellung.

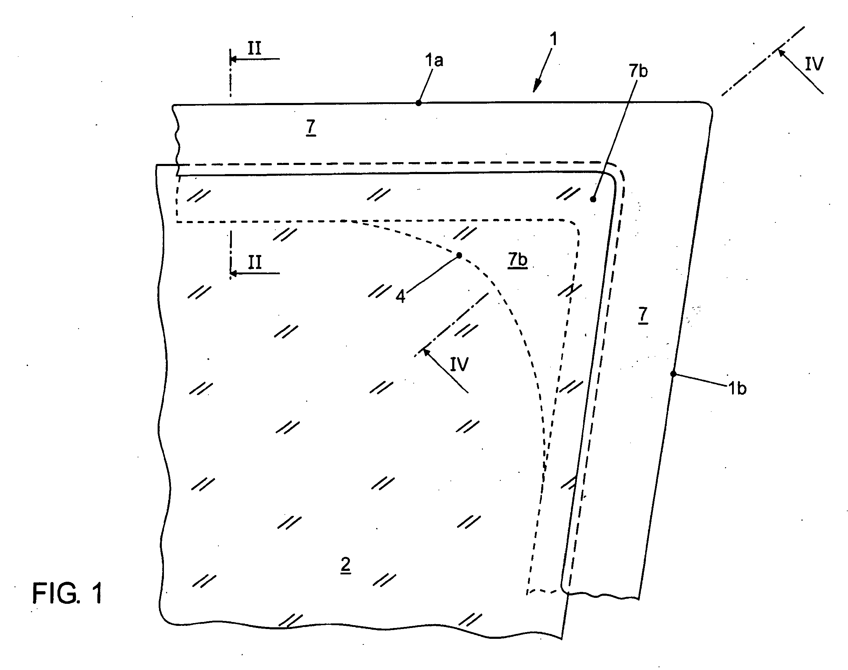

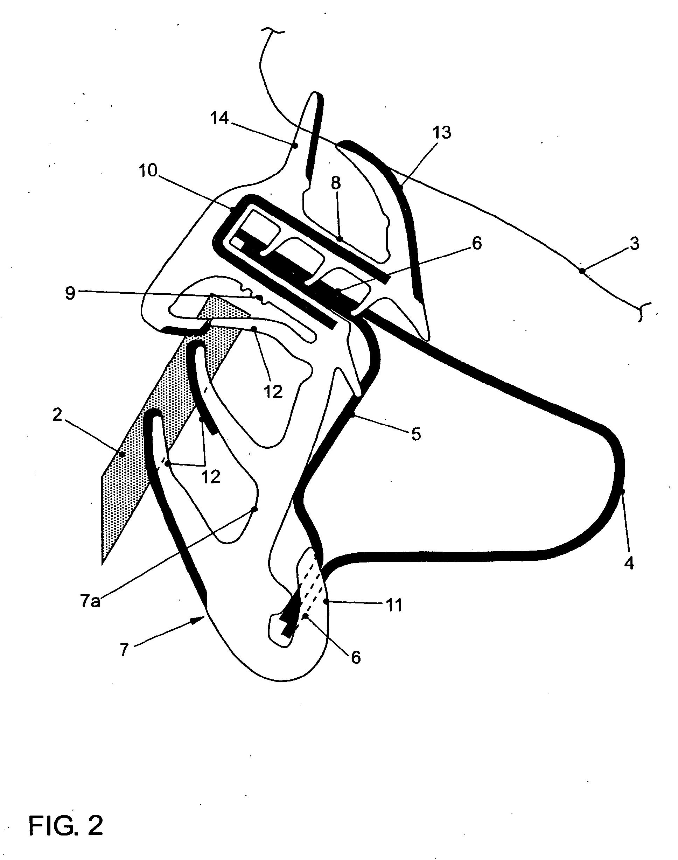

In der Fig. 1 ist ein Eckbereich eines Fensterrahmens 1 einer Kraftfahrzeugtüre mit einer absenkbaren Scheibe 2 dargestellt. Der Fensterrahmen 1 weist einen etwa horizontal verlaufenden Abschnitt 1 a und einen im Wesentlichen vertikal verlaufenden Abschnitt 1 b auf. Der dargestellte Eckbereich des Fensterrahmens 1 schließt sowohl an ein Seitenteil 3 (vgl. Fig. 2, nur angedeutet) als auch an z.B. eine B-Säule (nicht dargestellt) der Karosserie des Kraftfahrzeuges an.

Der im Wesentlichen auf die Türkonstruktion aufgesetzte, etwa U-förmige Fensterrahmen 1 setzt sich gemäß der Fig. 2 aus einem Innenblech 4 und einem Außenblech 5 zusammen. Diese sind mittels aneinander anliegenden Randflanschen 6 durch Schweißverbindungen fest miteinander verbunden und bilden wie Fig. 2 zeigt, ein geschlossenes Hohlprofil.

Auf die Randflansche 6 des U-förmigen Fensterrahmens 1 ist ein einstückig umlaufendes, elastisches Dicht- und Fensterführungsprofil 7 im (Folgenden als Dichtprofil bezeichnet) aufgesteckt.

Dazu weist das Dichtprofil 7 U-förmig ausgeführte Halteleisten 8, 9 mit einem inneren, metallischen Stützgerüst 10 auf, die auf den in der Fig. 2 etwa horizontal nach außen gerichteten, oberen Randflansch 6 des Fensterrahmens 1 aufgesteckt sind. Von den Halteleisten 8, 9 wirkt die in der Fig. 2 untere Halteleiste 9 zugleich als Anschlag, der eine Schließbewegung der absenkbaren Scheibe 2 begrenzt.

Ferner sind an den Basiskörper 7a des Dichtprofiles 7 U-förmige Halteleisten 11 angeformt, die den in der Fig. 2 unteren Randflansch 6 des Fensterrahmens 1 wie dargestellt umfassen.

Das Dichtprofil 7 trägt des Weiteren mehrere, die Scheibe 2 und das Außenblech 5 abdichtende, allgemein mit 12 bezeichnete Dichtlippen.

Der dem Türausschnitt in der Karosserie zugewandte Bereich des Dichtprofiles 7 trägt zudem von der Halteleiste 8 abragend eine innere Dichtlippe 13 und eine äußere Abdecklippe 14, die beide den Umfangsbereich des Fensterrahmens 1 abdichten, wobei die Abdecklippe 14 zudem einen ästhetischen Übergang zwischen Fensterrahmen 1 und angrenzende Karosseriebauteile bildet.

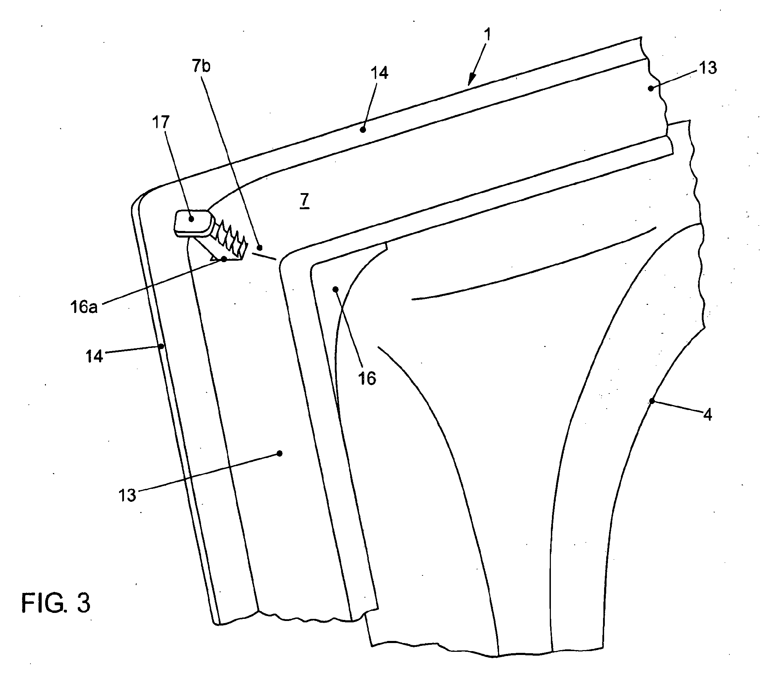

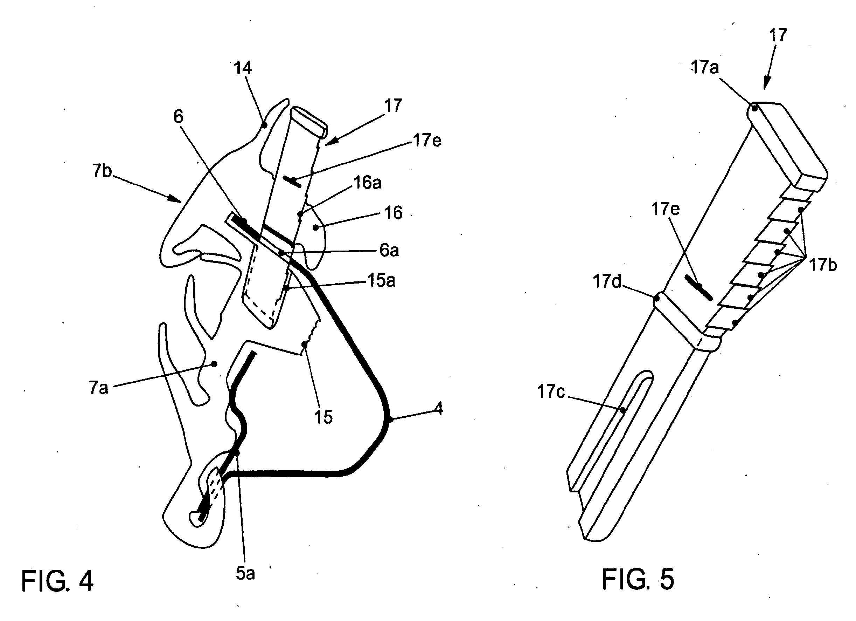

Im Eckbereich des Fensterrahmens 1 bzw. des Dichtprofiles 7 geht das Dichtprofil 7 in ein Formeckteil 7b (vgl. Fig. 3 und 4) über, bei dem die Halteleisten 8, 9 als materialstärkere, elastische Schenkelleisten 15, 16 ausgeführt sind. Das einstückig mit dem Dichtprofil 7 verbundene Formeckteil 7b ist gemäß der Fig. 1 am Innenrand bogenförmig ausgeführt, wodurch ein formschöner Übergang zwischen dem horizontalen und vertikalen Dichtprofilabschnitt bereitstellbar ist.

Die Schenkelleisten 15, 16 sind dabei angepasst an den verrundeten Abschnitt des Innenbleches 5 des Fensterrahmens 1 und umfassen abdichtend dessen Randflansch 6 (vgl. Fig. 3, äußere ersichtliche Schenkelleiste 16).

Dabei ist der korrespondierende Eckbereich des Außenbleches 5 des Fensterrahmens 1 mit einer Ausklinkung 5a (ohne Randflansch) ausgeführt, durch die hindurch die untere Schenkelleiste 15 des Eckteiles 7b in den Hohlraum des Fensterrahmens 1 einragen kann.

In der in der Fig. 1 eingezeichneten Schnittlinie IV - IV, - die etwa der Winkelhalbierenden der beiden Abschnitte 1 a, 1b des Fensterrahmens 1 entspricht - sind in einer Flucht liegende Ausnehmungen 16a, 15a in den Schenkelleisten 16, 15 und eine Ausnehmung 6a in dem Randflansch 6 des Innenbleches 4 vorgesehen.

In diese Ausnehmungen 16a, 6a und 15a ist von außerhalb des Fensterrahmens 1 ein Befestigungselement 17, etwa ein stiftförmiger Clip, (vgl. auch Fig. 5) eingesetzt, der das Formeckteil 7b des Dichtprofiles 7 im besagten Eckbereich formschlüssig mit dem Fensterrahmen 1 bzw. dem Innenblech 4 verbindet.

Der Clip 17 ist aus plastischem Kunststoff im Spritzgießverfahren hergestellt und ist im Querschnitt etwa quadratisch ausgeführt.

Der Clip 17 weist ein relativ flaches Kopfteil 17a, an einer seiner Führungsflächen mehrere als Widerhaken ausgeführte Vorsprünge 17b und einen zu seiner Längsmittelachse parallelen Einlaufmontagekanal 17c auf, der sich von einem verjüngten Endabschnitt des Clips 17 bis etwa zu dessen halber Länge erstreckt. Der Einlaufmontagekanal 17c wirkt in nicht ersichtlicher Weise mit einer Einschnürung in der Ausnehmung 16a der oberen Schenkelleiste 16 zusammen und bildet bei der Montage eine Einfädelhilfe für den Clip 17 in die korrespondierende Ausnehmung 16a.

Zwischen dem Einlaufkanal 17c und den Vorsprüngen 17b ist ferner ein Dichtring 17d an den Clip 17 angeformt, der die Ausnehmungen 16a, 15a der Schenkelleisten 16, 15 nach außen abdichtet. Ferner ist die untere Ausnehmung 15a in der Schenkelleiste 15 wie ersichtlich geschlossen als Sackloch ausgeführt.

Schließlich trägt der Clip 17 eine Markierung 17e, mittels der vermieden werden soll, dass der Clip 17 in einer Vormontagestellung zu weit in die äußere Schenkelleiste 16 eingeschoben wird und damit das Aufstecken der Dichtleiste 7 auf die Randflansche 6 des Fensterrahmens 1 behindert.

Die Dichtleiste 13 des Dichtprofils ist im Eckbereich nicht durchlaufend, sondern durch das Formeckteil 7b unterbrochen, so dass der darin einsteckbare Clip 17 in etwa in Fensterrahmenebene von außen frei zugänglich ist.

Bei der Montage des Dichtprofiles 7 an dem Fensterrahmen 1 wird zunächst der Clip 17 in die Ausnehmung 16a der äußeren Schenkelleiste 16 bis zur besagten Markierung 17e eingesteckt (vgl. Fig. 4). Das Dichtprofil 7 und der Clip 17 bilden so eine Vormontageeinheit.

Sodann wird das Dichtprofil 7 auf die Randflansche 6 des Fensterrahmens 1 aufgesteckt und ggf. mit diesem verklebt. Dann wird der Clip 17 durch die Ausnehmung 6a im Randflansch 6 und durch die Ausnehmung 15a in der inneren Schenkelleiste 15 eingesteckt und bildet im Eckbereich eine formschlüssige Verbindung zwischen dem Dichtprofil 7 und dem Fensterrahmen 1, wobei das Kopfteil 17a des Clips 17 bündig an der Schenkelleiste 16 anliegt.

Die Erfindung ist nicht auf das dargestellte Ausführungsbeispiel beschränkt. Insbesondere kann der Anwendungsbereich auch für andere Dichtprofile mit in deren Festsitz kritischen Eckbereichen liegen.

### Bezugszeichenliste

- 1: Fensterrahmen
- 1a: horizontaler Abschnitt
- 1b: vertikaler Abschnitt
- 2: Fensterscheibe
- 3: Seitenteil
- 4: Innenblech
- 5: Außenblech
- 5a: Ausklinkung
- 6: Randflansche
- 6a: Ausnehmung
- 7: Dichtprofil
- 7a: Basiskörper
- 7b: Eckteil
- 8: Halteleiste
- 9: Halteleiste
- 10: Stützgerüst
- 11: Halteleiste
- 12: Dichtlippen
- 13: Dichtlippe
- 14: Abdecklippe
- 15: Schenkelleiste
- 15a: Ausnehmung
- 16: Schenkelleiste
- 16a: Ausnehmung
- 17: Clip
- 17a: Kopfteil
- 17b: Vorsprünge
- 17c: Einlaufmontagekanal
- 17d: Dichtring
- 17e: Markierung

## Patentansprüche

1. Vorrichtung zum Befestigen eines gummielastischen Dichtprofiles (7), das auf einem umlaufenden Fensterrahmen (1) einer Kraftfahrzeugtür aufgesteckt und/oder aufgeklebt ist, wobei das Dichtprofil (7) zumindest in einem Eckbereich durch ein von außen einsteckbares Befestigungselement (Clip 17) am Fensterrahmen (1) gesichert ist, und wobei das Dichtprofil (7) in zumindest dem einen Eckbereich mit einem verrundeten, im Querschnitt gesehen materialverstärkten Formeckteil (7b) ausgeführt ist, durch das hindurch das Befestigungselement (Clip 17) mit dem Fensterrahmen (1) verbunden ist, **dadurch gekennzeichnet, dass** das Formeckteil (7b) des Dichtprofiles (7) mit zwei Schenkelleisten (15, 16) einen verrundeten Randflansch (6) des Fensterrahmens (1) umfasst, und dass das Befestigungselement (Clip 17) durch korrespondierende, in einer Flucht liegende Ausnehmungen (16a, 15a, 6a) in den Schenkelleisten (16, 15) und im Randflansch (6) des Fensterrahmens (1) eingeschoben ist.

2. Vorrichtung nach Anspruch 1, **dadurch gekennzeichnet, dass** das Befestigungselement (Clip 17) im Wesentlichen entlang einer Winkelhalbierenden schräg zwischen einem horizontal und einem vertikal verlaufenden Abschnitt des Dichtprofiles (7) eingesteckt ist.

3. Vorrichtung nach einem der vorhergehenden Ansprüche, **dadurch gekennzeichnet, dass** der Fensterrahmen (1) durch ein Innenblech (4) und ein Außenblech (5) mit aneinander verschweißten Randflanschen (6) in einem Hohlprofil ausgeführt ist, und/oder das Dichtprofil (7) mit entsprechenden, insbesondere U-förmig ausgeführten Halteleisten (8, 9) die Randflansche (6) umfasst, und dass insbesondere das Außenblech (5) im Eckbereich derart ausgeklinkt ist, dass eine materialverstärkte Schenkelleiste (15) des Dichtprofiles (7) über den Randflansch (6) des Innenbleches (4) und durch die Ausklinkung (5a) des Außenbleches (5) hindurch aufschiebbar und mittels des Befestigungselements (Clip 17) mit dem Innenblech (4) verbindbar ist.

4. Vorrichtung nach Anspruch 3, **dadurch gekennzeichnet, dass** an die äußeren, den Fensterrahmen (1) umfangsseitig begrenzenden Halteleisten (8) des Dichtprofiles (7) eine Dichtlippe (13) und/oder eine äußere Abdecklippe (14) angeformt sind und dass die innere Dichtlippe (13) im Eckbereich durch die äußere, materialverstärkte Schenkelleiste (16) unterbrochen ist, durch die hindurch das Befestigungselement (Clip 17) montierbar ist.

5. Vorrichtung nach einem der vorhergehenden Ansprüche, **dadurch gekennzeichnet, dass** das Befestigungselement (Clip 17) mit Widerhaken (17b) zu den Ausnehmungen (16a, 15a, 6a) in den Schenkelleisten (16, 15) versehen ist.

6. Vorrichtung nach einem der vorhergehenden Ansprüche, **dadurch gekennzeichnet, dass** das Befestigungselement (Clip 17) einen achsparallelen Einlaufmontagekanal (17c) aufweist, der mit einer Einschnürung in der Ausnehmung (16a) zumindest der äußeren Schenkelleiste (16) in Umfangsrichtung formschlüssig zusammenwirkt.

7. Vorrichtung nach Anspruch 6, **dadurch gekennzeichnet, dass** das Befestigungselement (Clip 17) zwischen dem Einlaufmontagekanal (17c) und als Widerhaken wirkenden Vorsprüngen (17b) einen Dichtabschnitt (17d) aufweist, der dichtend mit einer der Ausnehmungen (16a, 15a) der Schenkelleisten (16, 15) zusammenwirkt.

8. Vorrichtung nach einem der vorhergehenden Ansprüche, **dadurch gekennzeichnet, dass** das Befestigungselement (Clip 17) mit einem flachen Kopfteil (17a) ausgeführt ist.

9. Vorrichtung nach einem der vorhergehenden Ansprüche, **dadurch gekennzeichnet, dass** das Befestigungselement (Clip 17) mit einer sicht- oder fühlbaren Markierung (17e) versehen ist, die sicherstellt, dass in einer Vormontagestellung das in die Ausnehmung (16a) der äußeren Schenkelleiste (16) eingesteckte Befestigungselement (Clip 17) diese nicht nach innen überragt.

10. Vorrichtung nach einem der vorhergehenden Ansprüche, **dadurch gekennzeichnet, dass** das Befestigungselement (Clip 17) im Querschnitt polygonförmig, insbesondere quadratisch ausgeführt ist.

11. Vorrichtung nach einem der vorhergehenden Ansprüche, **dadurch gekennzeichnet, dass** das Befestigungselement (Clip 17) einstückig als KunststoffSpritzteil hergestellt ist und/oder ein stiftförmiger Clip ist.

## Claims

1. Device for fastening a rubber-elastic seal profile (7) which is placed and/or is adhesively bonded on an encircling window frame (1) of a motor vehicle door, wherein the seal profile (7) is secured on the window frame (1) at least in a corner region by a fastening element (clip 17) which is insertable from the outside, and wherein the seal profile (7) is designed in at least the one corner region with a rounded moulded corner part (7b) which is material-reinforced, as seen in cross section, and through which the fastening element (clip 17) is connected to the window frame (1), **characterized in that** the moulded corner part (7b) of the seal profile (7) surrounds, with two leg strips (15, 16), a rounded edge flange (6) of the window frame (1), and **in that** the fastening element (clip 17) is pushed through corresponding, aligned recesses (16a, 15a, 6a) in the leg strips (16, 15) and in the edge flange (6) of the window frame (1).

2. Device according to Claim 1, **characterized in that** the fastening element (clip 17) is inserted obliquely substantially along a bisector between a horizontally and a vertically running section of the seal profile (7).

3. Device according to either of the preceding claims, **characterized in that** the window frame (1) is formed in a hollow profile by an inner plate (4) and an outer plate (5) having edge flanges (6) welded to each other, and/or the seal profile (7) surrounds the edge flanges (6) by means of corresponding holding strips (8, 9), in particular of U-shaped design, and **in that** in particular the outer plate (5) is notched in the corner region in such a manner that a material-reinforced leg strip (15) of the seal profile (7) can be pushed over the edge flange (6) of the inner plate (4) and through the notch (5a) in the outer plate (5) and can be connected to the inner plate (4) by means of the fastening element (clip 17).

4. Device according to Claim 3, **characterized in that** a sealing lip (13) and/or an outer covering lip (14) are integrally formed on the outer holding strips (8) of the seal profile (7), said holding strips bounding the window frame (1) on the circumferential side, and **in that** the inner sealing lip (13) is interrupted in the corner region by the outer, material-reinforced leg strip (16) through which the fastening element (clip 17) can be mounted.

5. Device according to one of the preceding claims, **characterized in that** the fastening element (clip 17) is provided with barbs (17b) with respect to the recesses (16a, 15a, 6a) in the leg strips.(16, 15).

6. Device according to one of the preceding claims, **characterized in that** the fastening element (clip 17) has an axially parallel inlet mounting channel (17c) which interacts in a form-fitting manner in the circumferential direction with a construction in the recess (16a) at least of the outer leg strip (16).

7. Device according to Claim 6, **characterized in that** the fastening element (clip 17) between the inlet mounting channel (17c) and projections (17b) acting as barbs has a sealing section (17d) which interacts in a sealing manner with one of the recesses (16a, 15a) of the leg strips (16, 15).

8. Device according to one of the preceding claims, **characterized in that** the fastening element (clip 17) is designed with a flat head part (17a).

9. Device according to one of the preceding claims, **characterized in that** the fastening element (clip 17) is provided with a visible or tactile marking (17e) which ensures that, in a preassembly position, the fastening element (clip 17) which is inserted into the recess (16a) of the outer leg strip (16) does not project inwards beyond said recess.

10. Device according to one of the preceding claims, **characterized in that** the fastening element (clip 17) is of polygonal design, in particular square design, in cross section.

11. Device according to one of the preceding claims, **characterized in that** the fastening element (clip 17) is produced as a single piece in the form of a plastics injection-moulded part and/or is a pin-shaped clip.

## Revendications

1. Dispositif de fixation d'un profilé d'étanchéité (7) en caoutchouc élastique enfiché et/ou collé sur un cadre de fenêtre (1) circonférentiel d'une porte de véhicule automobile, le profilé d'étanchéité (7) étant fixé au cadre de fenêtre (1) dans au moins une zone de coin par le biais d'un élément de fixation (attache 17) enfichable de l'extérieur et le profilé d'étanchéité (7) étant réalisé au moins dans la zone de coin avec une partie d'angle vulcanisée (7b) arrondie renforcée en matière en section transversale à travers laquelle l'élément de fixation (attache 17) est relié au cadre de fenêtre (1), **caractérisé en ce que** la partie d'angle vulcanisée (7b) du profilé d'étanchéité (7) dotée de deux baguettes de côté (15, 16) comprend une bride de bordure (6) arrondie du cadre de fenêtre (1) et que l'élément de fixation (attache 17) est enfoncé dans les baguettes de côté (16, 15) et dans la bride de bordure (6) du cadre de fenêtre (1) par des évidements (16a, 15a, 6a) alignés correspondants.

2. Dispositif selon la revendication 1, **caractérisé en ce que** l'élément de fixation (attache 17) est enfiché pour l'essentiel le long d'une bissectrice passant entre une section horizontale et une section verticale du profilé d'étanchéité (7).

3. Dispositif selon l'une quelconque des revendications précédentes, **caractérisé en ce que** le cadre de fenêtre (1) est réalisé dans un profilé creux par le biais d'une tôle intérieure (4) et d'une tôle extérieure (5), avec des brides de bordure (6) soudées les unes aux autres et/ou que le profilé d'étanchéité (7) doté de baguettes de maintien (8, 9) correspondantes prenant notamment une forme de U comprennent les brides de bordure (6) et notamment que la tôle extérieure (5) est décrochée de telle sorte dans la zone de coin qu'une baguette de côté (15) du profilé d'étanchéité (7) renforcée en matière peut être coulissée au-dessus de la bride de bordure (6) de la tôle intérieure (4) et au travers du décrochage (5a) de la tôle extérieure (5) et peut être reliée à la tôle intérieure (4) par le biais de l'élément de fixation (attache 17).

4. Dispositif selon la revendication 3, **caractérisé en ce qu'**une lèvre étanche (13) et/ou une lèvre couvrante (14) extérieure sont rattachées aux baguettes de maintien (8) extérieures, délimitant le cadre de fenêtre (1) du côté périphérique, du profilé d'étanchéité (7) et que la lèvre étanche (13) intérieure est interrompue dans la zone de coin par la baguette de côté (16) extérieure renforcée en matière à travers laquelle l'élément de fixation (attache 17) peut être monté.

5. Dispositif selon l'une quelconque des revendications précédentes, **caractérisé en ce que** l'élément de fixation (attache 17) est pourvu, dans les baguettes de côté (16, 15), de contre-crochets (17b) par rapport aux évidements (16a, 15a, 6a).

6. Dispositif selon l'une quelconque des revendications précédentes, **caractérisé en ce que** l'élément de fixation (attache 17) comporte un canal de montage de tête (17c) parallèle à l'axe interagissant par complémentarité de formes avec un rétrécissement prévu dans l'évidement (16a) de la baguette de côté (16) extérieure au moins, dans la direction périphérique.

7. Dispositif selon la revendication 6, **caractérisé en ce que** l'élément de fixation (attache 17) comporte une section étanche (17d) prévue entre le canal de montage de tête (17c) et les saillies (17b) servant de contre-crochets et entrant en interaction de façon étanche avec un des évidements (16a, 15a) des baguettes de côté (16, 15).

8. Dispositif selon l'une quelconque des revendications précédentes, **caractérisé en ce que** l'élément de fixation (attache 17) est réalisé avec une partie de tête (17a) plate.

9. Dispositif selon l'une quelconque des revendications précédentes, **caractérisé en ce que** l'élément de fixation (attache 17) est pourvu d'un marquage (17e) visuel ou sensitif garantissant que dans une position de prémontage, l'élément de fixation (attache 17) enfiché dans l'évidement (16a) de la baguette de côté (16) extérieure ne dépasse pas de celle-ci vers l'intérieur.

10. Dispositif selon l'une quelconque des revendications précédentes, **caractérisé en ce que** l'élément de fixation (attache 17) prend une forme polygonale, notamment carrée, en section transversale.

11. Dispositif selon l'une quelconque des revendications précédentes, **caractérisé en ce que** l'élément de fixation (attache 17) est fabriqué d'un seul tenant sous la forme d'une pièce injectée en matière plastique et/ou est une attache en forme de pointeaux.
